# EUROPÄISCHE PATENTSCHRIFT

(11) **EP 1 300 065 B1**
(45) Veröffentlichungstag und Bekanntmachung des Hinweises auf die Patenterteilung: **22.11.2006**
(21) Anmeldenummer: 02021515.8
(22) Anmeldetag: 26.09.2002
(51) Int. Cl.: A01D 75/18

(54) **Mähmaschine mit Sicherheitsvorrichtung**
Mower with safety device
Faucheuse à dispositif de sécurité

(30) Priorität: 06.10.2001 DE 10149364
(43) Veröffentlichungstag der Anmeldung: 09.04.2003
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Afting, Andreas, 48488 Emsbüren (DE)

(56) Entgegenhaltungen:
- EP-A- 0 512 602
- DE-A- 3 641 546
- DE-U- 9 007 819
- FR-A- 2 537 385
- GB-A- 1 159 874
- GB-A- 1 586 730
- GB-A- 1 589 050
- NL-A- 9 002 867

## Beschreibung

Die Erfindung betrifft eine an eine heckseitige Hubeinrichtung eines landwirtschaftlichen Trägerfahrzeuges anbringbare Mähmaschine nach dem Oberbegriff des Anspruches 1. Derartige Maschinen sind aus der Praxis in vielfältigen Ausführungsformen bekannt und werden hauptsächlich zum Ernten von Gras oder dgl. Erntegüter verwendet. Im Ernteeinsatz wird die Mäheinrichtung derartiger Mähmaschinen mit großer Geschwindigkeit über eine Feld- oder Wiesenfläche bewegt, wobei die Mäheinrichtung über die Bodenoberfläche bzw. über die Grasnarbe gleitet. Da es in der Praxis jedoch häufiger vorkommt, dass zu mähende Feld- oder Wiesenflächen Steine oder dergleichen Hindernisse enthalten, ist es notwendig, diese Mähmaschinen mit Sicherheitseinrichtungen zu versehen, welche es verhindern sollen, dass durch die Steine oder dergleichen Hindernisse Beschädigungen an der Mäheinrichtung entstehen.

Aus der DE 28 25 678 A1 ist ein Aufhängungsmechanismus mit einer solchen Sicherheitseinrichtung bekannt geworden, der aus einem Schwenkbalken besteht, dessen erstes Ende außerhalb des Trägerfahrzeuges hervorragt und zur Aufnahme eines Feldgerätes dient, während das zweite Ende des Schwenkbalkens dafür vorgesehen ist, mit einem oberen und mit einem unteren, an der dem Feldgerät abgewandten Seite befindlichen Arm der Dreipunktbefestigung des Trägerfahrzeuges verbunden zu werden. An der dem Feldgerät zugewandten Seite der Dreipunktbefestigung ist eine vorwärtsragende Konsole angebracht, an der der zweite untere Arm der Dreipunktbefestigung zur Anlage kommt und dort auch unter normalen Einsatzverhältnissen durch den Einfluss einer Druckfeder verbleiben soll. Lediglich beim Auftreffen auf einen Stein oder dergleichen Hindernis eines beispielsweise als Mäheinrichtung ausgebildeten Feldgerätes soll es zu einem Abheben des der Mäheinrichtung zugewandten Armes der Dreipunktbefestigung von der vorwärtsragenden Konsole und damit zu einem Zurückschwenken des als Mäheinrichtung ausgeführten Feldgerätes kommen. Die vorstehend beschriebene Sicherheitseinrichtung ist jedoch mit dem Mangel behaftet, dass aufgrund von unterschiedlichen Reibungsverhältnissen im praktischen Einsatz eines als Mäheinrichtung ausgebildeten Feldgerätes zwischen der Bodenoberfläche und der Mäheinrichtung eine exakte Einstellung der Federkraft nicht möglich ist und sich dadurch eine korrekte Arbeits- und Betriebsstellung der Mäheinrichtung nicht einstellen lässt. Die Mäheinrichtung pendelt folglich immer zwischen einer theoretisch vorgesehenen Arbeits- und Betriebsstellung und einer zurückgeschwenkten Stellung hin und her, so dass dadurch ein sauberes und zufriedenstellendes Mähergebnis nicht erreichbar ist.

Ein weitere Vorrichtung zum Ankoppeln eines in der Arbeits- und Betriebsstellung hinter und seitlich von einem landwirtschaftlichen Trägerfahrzeug geführten Arbeitsgerätes ist in der NL 9 002 867 A offenbart. Hierbei handelt es sich um ein Arbeitsgerät, welches auch als Mähmaschine ausgebildet sein kann und mit einer Einrichtung zum Ankoppeln an eine Dreipunkthubeinrichtung einer landwirtschaftlichen Zug- und Antriebsmaschine ausgerüstet ist. Um bei einer Kollision des Werkzeuges des Arbeitsgerätes mit einem Hindernis eine Ausweichbewegung des Werkzeuges nach hinten zu ermöglichen, ist die dem Werkzeug zugewandte Anlenkstelle zur Aufnahme eines Unterlenkers der Dreipunkthubeinrichtung so gestaltet, dass diese Anlenkstelle eine Schwenkbewegung in Fahrt- und Arbeitsrichtung ausführen kann. Ein wesentlicher Nachteil einer solchen Anordnung besteht darin, dass das Werkzeug in seinem vorderen Bereich eine Kippbewegung nach unten ausführt und somit keine Unterstützung bei der Überwindung des Hindernisses erfährt.

Aufgabe der Erfindung ist es daher, eine Mähmaschine der vorstehend angegebenen Art zu schaffen, welche sich in einer konstruktiv einfachen Ausbildung durch eine Sicherheitseinrichtung auszeichnet, die in zuverlässiger Art und Weise und ohne Beeinträchtigung des Mähergebnisses ein Überwinden von Steinen oder dgl. Hindernisse auf der zu bearbeitenden Feld- oder Wiesenfläche ohne Beschädigungen ermöglicht.

Zur Lösung der gestellten Aufgabe zeichnet sich die Mähmaschine der vorstehend genannten Art durch die im Anspruch 1 angegebenen Merkmale aus. Hinsichtlich der weiteren Ausgestaltung der Erfindung wird auf die Ansprüche 2 bis 15 verwiesen.

Bei einer Mähmaschine zum Ernten von Gras oder dgl. Erntegüter gemäß der Erfindung wird eine Sicherheitseinrichtung zum Schutz einer in der Arbeits- und Betriebsstellung seitlich von einem Trägerfahrzeug geführten Mäheinrichtung vor Beschädigungen durch Steine oder dgl. Hindernisse vorgeschlagen, welche in einer konstruktiv einfachen und somit kostengünstigen Art und Weise in eine Dreipunktanbauvorrichtung der Mähmaschine integriert ist und dadurch die an Ober- und Unterlenkern befindlichen Kugelgelenke einer Hubeinrichtung des Trägerfahrzeuges als Schwenkgelenke nutzt. Dazu ist es nach der Erfindung vorgesehen, die Mäheinrichtung an einem ersten Ende eines Tragbalkens schwenkbar zu haltern, während am zweiten Ende des Tragbalkens eine Dreipunktanbauvorrichtung mit Anlenkstellen für Ober- und Unterlenker angebracht ist, wobei die an der der Mäheinrichtung abgewandten Seite des Tragbalkens befindliche Anlenkstelle derartig nachgiebig mit der Dreipunktanbauvorrichtung verbunden ist, dass beim Auftreffen der Mäheinrichtung auf ein Hindernis bei der Bewegung in Fahrt- und Arbeitsrichtung eine Schwenkbewegung der Mäheinrichtung in einer der Fahrt- und Arbeitsrichtung entgegengesetzten Richtung und ein Anheben des in Bezug zur Fahrt- und Arbeitsrichtung vorderen Bereiches der Mäheinrichtung (Kippen) eingeleitet wird. Durch diese Art der Ausbildung einer Dreipunktanbauvorrichtung wird es ermöglicht, dass beim Auftreffen der Mäheinrichtung auf einen Stein eine Schwenkbewegung der Mäheinrichtung um eine Achse ausgeführt wird, welche sich von der Anlenkstelle des der Mäheinrichtung zugewandten Unterlenkers zu der Anlenkstelle des Oberlenkers erstreckt. Diese Schwenkbewegung setzt sich aus zwei Teilbewegungen zusammen, wobei eine erste Teilbewegung eine Schwenkung der Mäheinrichtung in einer zur Bodenoberfläche parallelen Ebene jedoch in einer der Fahrt- und Arbeitsrichtung entgegengesetzten Richtung verläuft, während der zweite Teil ein Anheben eines in Bezug zur Fahrt- und Arbeitsrichtung vorderen Bereiches der Mäheinrichtung ausmacht. Die Mäheinrichtung führt also eine Kippbewegung um eine horizontale und quer zur Fahrt- und Arbeitsrichtung ausgerichtete Achse aus, so dass dadurch ein Überqueren eines Steines oder dgl. Hindernisses bedeutend erleichtert wird. Um diesen Effekt zu erzielen, ist es nach der Erfindung vorgesehen, dass die Anlenkstelle an der der Mäheinrichtung abgewandten Seite der Dreipunktanbauvorrichtung in einer der Fahrt- und Arbeitsrichtung entgegengesetzten Richtung nachgiebig mit der Dreipunktanbauvorrichtung verbunden ist, wobei die Verbindung zwischen der Anlenkstelle und der Dreipunktanbauvorrichtung erst beim Überschreiten einer vorbestimmten Haltekraft gelöst wird. Diese als Schwelle anzusehende Haltekraft bewirkt dabei, dass die Mäheinrichtung im praktischen Einsatz stets in der vorgesehenen Arbeits- und Betriebsstellung gehalten wird und dadurch optimale Mähergebnisse gewährleistet werden können.

In einer vorteilhaften Ausführungsform einer mit den erfindungsgemäßen Merkmalen ausgestatteten Mähmaschine ist die an der der Mäheinrichtung abgewandten Seite der Dreipunktanbauvorrichtung befindliche Anlenkstelle als eine dreigliedrige Lenkeranordnung ausgeführt, welche aus einem mit zumindest einem Unterlenkerzapfen versehenen Lenker besteht, der von einer in ihrer Länge nachgiebig ausgebildeten Strebe abgestützt wird. Der Lenker ist dazu so angeordnet, daß er aus seiner Ausgangsstellung in einer der Fahrt- und Arbeitsrichtung entgegengesetzten Richtung verschwenkbar ist. Bevor jedoch diese Schwenkbewegung einsetzen kann, muß zunächst eine vorbestimmte Haltekraft überwunden werden. Diese Haltekraft wird von einer beispielsweise als Druckstrebe ausgebildeten Strebe aufgebracht, die aus zwei ineinander schiebbar ausgebildeten Abschnitten besteht, wobei der innere Abschnitt durch eine mit einer Druckfeder vorgespannten Verriegelungsklinke, die mit einer Halteklinke des äußeren Abschnittes zusammenwirkt, in seiner Ausgangsstellung gehalten wird. In der Ausgangsstellung nimmt die Strebe ihre maximale Länge ein. Als ortsfestes Basisglied der Lenkeranordnung dient ein fest mit dem Tragbalken der Mäheinrichtung verbundener Tragarm, wobei es für die nach der Erfindung vorgesehene Funktion unerheblich ist, ob die Lenkeranordnung, soweit es der Bauraum zuläßt, nun oberhalb oder unterhalb von dem Tragarm angebracht ist. Zur Anpassung an unterschiedliche Arbeits- und Betriebsverhältnisse ist die Vorspannkraft der Druckfeder verstellbar ausgeführt.

Gemäß einer vorteilhaften Weiterbildung der Erfindung kann es vorgesehen sein, daß die Lagerung des Lenkers der Lenkeranordnung so gestaltet ist, daß der/die Unterlenkerzapfen der Anlenkstelle an der der Mäheinrichtung abgewandten Seite der Dreipunktanbauvorrichtung bei der Schwenkbewegung des Lenkers aus der Ausgangsstellung der Schwenkbewegung der Mäheinrichtung beim Auftreffen auf einen Stein oder dergleichen Hindernisse zumindest teilweise nachgeführt wird. Das bedeutet, daß während der beim Auftreffen auf einen Stein oder dgl. Hindernis einsetzenden Schwenkbewegung der Mäheinrichtung, deren Drehpunkt im Bereich des/der Unterlenkerzapfen der Anlenkstelle an der der Mäheinrichtung zugewandten Seite der Dreipunktanbauvorrichtung liegt, der Lenker der Lenkeranordnung aus seiner Ausgangsstellung in zur Fahrt- und Arbeitsrichtung entgegengesetzter Richtung verschwenkt wird und sich dabei der/die Unterlenkerzapfen der Anlenkstelle an der der Mäheinrichtung abgewandten Seite zumindest in etwa auf einer Kreisbahn um den/die Unterlenkerzapfen an der der Mäheinrichtung zugewandten Anlenkstelle bewegen. Dadurch werden in vorteilhafter Weise Verspannungen zwischen den im praktischen Einsatz seitlich arretierten Unterlenkern der Hubeinrichtung vermieden. Um diese Nachführeigenschaften zu erreichen, ist die Lagerung des Lenkers der Lenkeranordnung so gestaltet, daß eine durch einen Lagerbolzen des Lenkers der Lenkeranordnung führende Achse in einem Winkel zu einer durch die Unterlenkerzapfen der Anlenkstellen führenden Mittelachse ausgerichtet ist und dabei zumindest in etwa im Bereich des Unterlenkerzapfens der Anlenkstelle an der der Mäheinrichtung zugewandten Seite der Dreipunktanbauvorrichtung diese Mittelachse schneidet. Bei der Verwendung von zwei Unterlenkerzapfen kann die Achse des Lagerbolzens des Lenkers erfindungsgemäß so ausgerichtet sein, daß diese die durch die Unterlenkerzapfen führende Mittelachse in einem etwa mittig zwischen den Unterlenkerzapfen gelegenen Bereich der Anlenkstelle an der der Mäheinrichtung zugewandten Seite der Dreipunktanbauvorrichtung schneidet.

Ein weiterer vorteilhafter Aspekt der Erfindung kann sich durch eine Verwendung einer mit einer Druckkraft beaufschlagbaren hydraulischen Kolben-Zylinder-Anordnung als Strebe in der Lenkeranordnung ergeben, wobei die hydraulische Kolben-Zylinder-Anordnung an ihrem Druckanschluß mit einem Hydraulikspeicher zusammenwirkt. Dadurch ergibt sich die Möglichkeit einer selbsttätigen Rückstellung der Strebe in ihre Ausgangslänge beispielsweise nach dem Auftreffen und Überqueren eines Steines oder dgl. Hindernis durch die Mäheinrichtung.

In einer weiteren denkbaren Ausführungsform kann es vorgesehen sein, die Anlenkstelle an der der Mäheinrichtung abgewandten Seite der Dreipunktanbauvorrichtung an einem Tragarm anzubringen, welcher teleskopisch in seiner Länge veränderbar ausgeführt ist. Hierbei könnten Federn oder dgl. Kraftspeicher angewendet werden, um den Tragarm in seiner ausgefahrenen Stellung zu halten und erst beim Überschreiten einer vorbestimmten Haltekraft eine Überführung in die eingefahrene Stellung zulassen.

Eine detaillierte Beschreibung des Gegenstandes der Erfindung erfolgt nun anhand eines Ausführungsbeispieles. In der Zeichnung stellt im einzelnen dar:
- Fig.1: eine perspektivische Darstellung einer erfindungsgemäßen Mähmaschine in der Arbeits- und Betriebsstellung;
- Fig.2: eine perspektivische Darstellung der erfindungsgemäßen Mähmaschine nach einem Überlastungsfall mit einer in einer der Fahrt- und Arbeitsrichtung entgegengesetzt gerichteten Richtung verschwenkten Mäheinrichtung;
- Fig.3: eine vergrößerte Ansicht der Hauptmerkmale einer Dreipunktanbauvorrichtung der erfindungsgemäßen Mähmaschine;
- Fig.4: eine vergrößerte Darstellung einer Ausführungsform einer Strebe der Lenkeranordnung an der Dreipunktanbauvorrichtung;

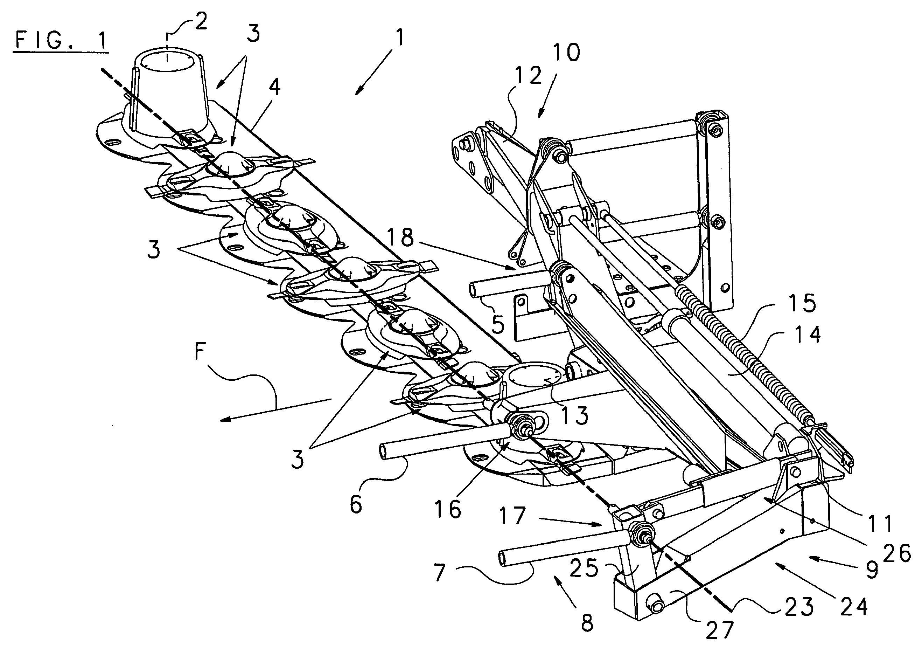

Ein Ausführungsbeispiel einer erfindungsgemäßen Mähmaschine ist in Fig. 1 näher veranschaulicht. Dabei handelt es sich um eine Mähmaschine mit einer in der Arbeits- und Betriebsstellung seitlich von einem landwirtschaftlichen Trägerfahrzeug geführten Mäheinrichtung 1, welche eine Anzahl von um eine vertikale Achse 2 rotierenden Schneidorganen 3 umfaßt. Solche Maschinen dienen dem Ernten von Gras oder dgl. landwirtschaftlichen Emtegütern. Die Mäheinrichtung besteht dazu aus einem Mähholm 4, der der Lagerung und dem Antrieb der rotierenden Schneidorgane 3 dient. Zur Anpassung an verschiedenste Einsatzverhältnisse oder Erntegüter kann der Mäheinrichtung 1 eine bekannte, nicht dargestellte Aufbereitungseinrichtung nachgeordnet sein, welche dazu dient, das Emtegut stärker aufzuschließen, so daß dadurch der nachfolgende Trocknungsprozess verkürzt wird. Zur Verbindung der Mähmaschine mit dem landwirtschaftlichen Trägerfahrzeug, insbesondere zu Anbringung an einer aus einem Oberlenker 5 und aus Unterlenkern 6,7 bestehenden Hubeinrichtung 8 ist eine Dreipunktanbauvorrichtung 9 vorgesehen, an die sich ein Tragbalken 10 anschließt, der sich zumindest annähernd quer zur Fahrt- und Arbeitsrichtung F erstreckt und an dessen äußerem Ende über eine sogenannte Schwerpunktsaufhängung / Mittenaufhängung die Mäheinrichtung 1 schwenkbeweglich angelenkt ist. Der Tragbalken 10 ist dazu in einen fest mit der Dreipunktanbauvorrichtung 9 verbundenen Abschnitt 11 und in einen schwenkbaren Abschnitt 12 unterteilt, wobei der schwenkbare Abschnitt 12 um eine in Fahrt- und Arbeitsrichtung F gerichtete Achse 13 schwenkbar am Abschnitt 11 gelagert ist. Durch diese Unterteilung des Tragbalkens 10 kann die Mäheinrichtung 1 mittels einer hydraulischen Kolben-Zylinder-Anordnung 14 aus der seitlich vom Trägerfahrzeug befindlichen Arbeits- und Betriebsstellung in eine nahezu vertikale Transportstellung und zurück überführt werden. Eine etwa parallel zur hydraulischen Kolben-Zylinder-Anordnung 14 angeordnete Feder 15 dient der Einstellung der Auflagekraft der Mäheinrichtung 1 auf der Bodenoberfläche und damit der Anpassung der Mähmaschine an unterschiedlichste Einsatz- und Ernteverhältnisse.

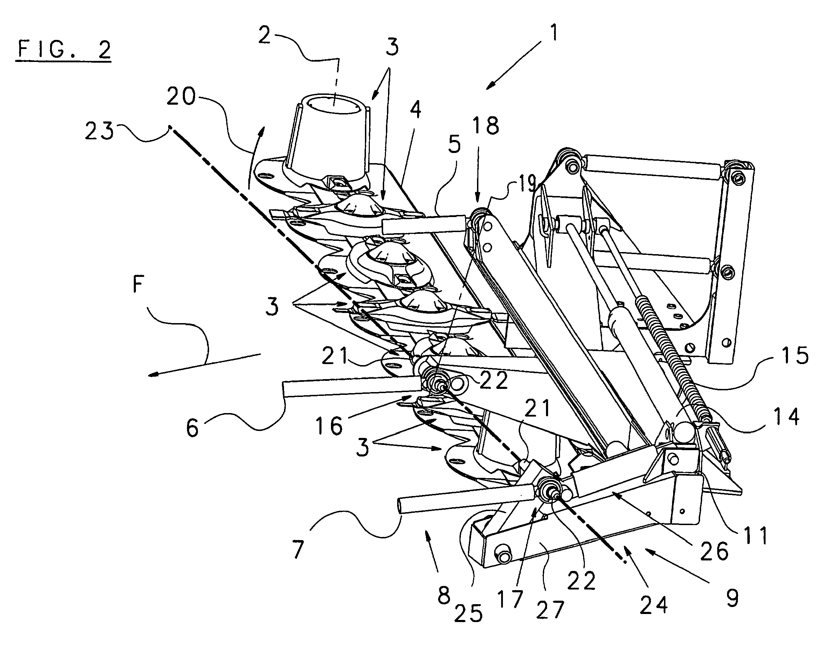

Wie weiterhin aus der Fig. 1 ersichtlich ist, umfaßt die Dreipunktanbauvorrichtung 9 Anlenkstellen 16,17 für die Unterlenker 6,7 und eine Anlenkstelle 18 für den Oberlenker 5. Die Anlenkstelle 16 an der der Mäheinrichtung 1 zugewandten Seite der Dreipunktanbauvorrichtung 9 und die Anlenkstelle 18 sind der Dreipunktanbauvorrichtung 9 dabei fest zugeordnet, während die Anlenkstelle 17 erfindungsgemäß an der der Mäheinrichtung 1 abgewandten Seite in einer der Fahrt- und Arbeitsrichtung F entgegen gesetzten Richtung nachgiebig an der Dreipunktanbauvorrichtung 9 angebracht ist. Durch diese Ausbildung der Dreipunktanbauvorrichtung 9 ergibt sich beim Auftreffen der Mäheinrichtung 1 im Mäheinsatz auf einen Stein oder dgl. Hindernis eine in Fig. 2 dargestellte Schwenkbewegung der Mäheinrichtung 1 um eine durch die Anlenkstelle 16 des Unterlenkers 6 und durch die Anlenkstelle 18 des Oberlenkers 5 sich erstreckende Achse 19. Diese Schwenkbewegung setzt sich aus zwei Teilbewegungen zusammen, wobei eine erste Teilbewegung eine Schwenkung der Mäheinrichtung 1 in einer zur Bodenoberfläche parallelen Ebene jedoch in einer der Fahrt- und Arbeitsrichtung F entgegengesetzten Richtung verläuft, während der zweite Teil ein Anheben eines in Bezug zur Fahrt- und Arbeitsrichtung F vorderen Bereiches der Mäheinrichtung 1 in einer der Pfeilrichtung 20 entsprechenden Richtung ausmacht. Ein Vergleich der Stellungen der Mäheinrichtung 1 in den Figuren 1 und 2 gegenüber einer durch die Unterlenkerzapfen 21,22 der Anlenkstellen 16,17 sich erstreckenden Mittelachse 23 zeigt die das Überqueren eines Steines oder dgl. Hindernisses erleichternde Schwenkbewegung der Mäheinrichtung 1.

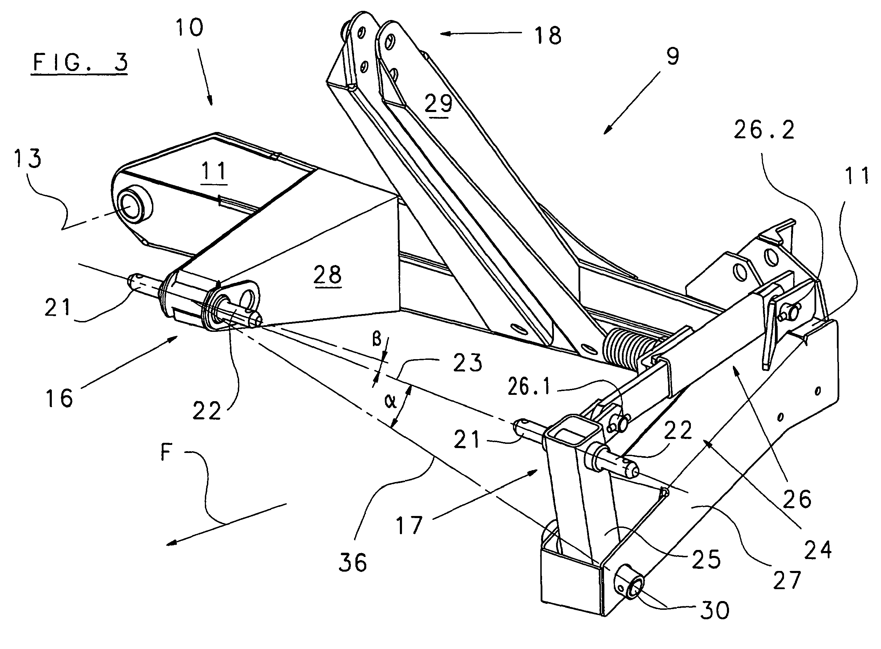

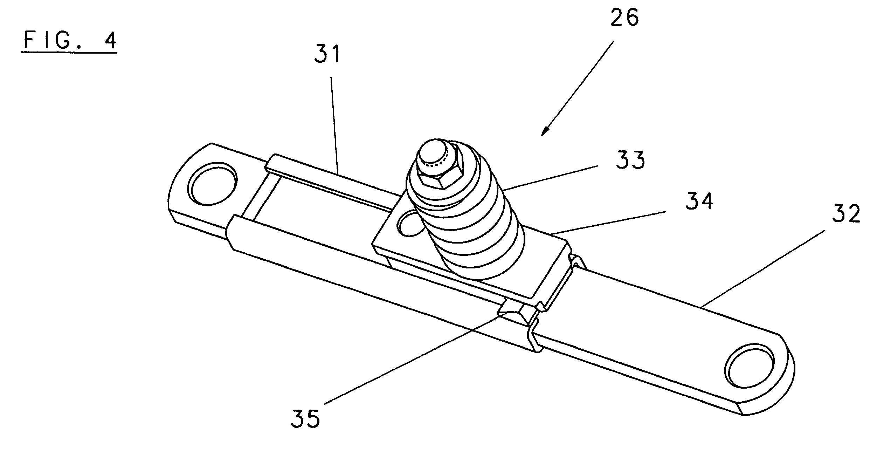

Eine vorteilhafte Ausführungsform einer erfindungsgemäßen Dreipunktanbauvorrichtung 9 ist in Fig.3 wiedergegeben, wobei die Anlenkstelle 17 Teil einer dreigliedrigen Lenkeranordnung 24 ist, die aus einem die Unterlenkerzapfen 21,22 aufnehmenden Lenker 25, einer den Lenker 25 abstützenden Strebe 26 und einem als ortsfestes Basisglied ausgebildeten, fest am Abschnitt 11 des Tragbalkens 10 angebrachten Tragarm 27 besteht. Die ebenfalls mit Unterlenkerzapfen 21,22 versehene Anlenkstelle 16 sowie die den Oberlenker 5 aufnehmende Anlenkstelle 18 dagegen sind an fest mit dem Abschnitt 11 des Tragbalkens 10 verbundenen Tragarmen 28,29 der Dreipunktanbauvorrichtung 9 angebracht. Wie aus der Fig.3 weiterhin hervorgeht, ist der Lenker 25 zur Bildung einer Anlenkstelle 17, welche in einer der Fahrt- und Arbeitsrichtung F entgegen gesetzten Richtung nachgiebig an der Dreipunktanbauvorrichtung angeordnet ist, über einen Lagerbolzen 30 schwenkbar an dem Tragarm 27 gelagert und so ausgerichtet, daß der Lenker 25 aus seiner Ausgangsstellung in zur Fahrt- und Arbeitsrichtung F entgegen gesetzter Richtung verschwenken kann, nachdem eine vorbestimmte Haltekraft überwunden ist, welche von der Strebe 26 aufgebracht wird. Die Strebe 26 ist dazu an ihrem ersten Ende über eine Bolzenverbindung 26.1 mit an der rückwärtigen Seite des Lenkers 25 angebrachten Laschen verbunden, während das zweite Ende der Strebe 26 über eine weitere Bolzenverbindung 26.2 in an dem festen Abschnitt 11 des Tragbalkens 10 angebrachten Laschen schwenkbar aufgehängt ist. Als denkbare Alternative zur Verbindung zwischen der Strebe 26 und dem Lenker 25 über die Bolzenverbindung 26.1 könnte es auch vorgesehen sein, die Strebe 26 direkt an einen der Unterlenkerzapfen 21,22 anzulenken. Eine konstruktiv einfache Form der als Druckstrebe ausgebildeten und in Fig. 4 veranschaulichten Strebe 26 besteht dazu aus zwei ineinander schiebbar ausgeführten Abschnitten 31,32, wobei der innere Abschnitt 32 durch eine mit einer Druckfeder 33 vorgespannten Verriegelungsklinke 34, die mit einer Halteklinke 35 des äußeren Abschnittes 31 zusammenwirkt und dabei die Haltekraft aufbringt, in einer Stellung gehalten wird, in der die Strebe 26 ihre größte Länge einnimmt. Zur Anpassung an unterschiedliche Arbeits- und Betriebsverhältnisse kann die Vorspannkraft der Druckfeder 33 in ihrer Größe verstellt werden.

Gemäß einer vorteilhaften Weiterbildung der Erfindung kann es vorgesehen sein, daß die Lagerung des Lenkers 25 der Lenkeranordnung 24 so gestaltet ist, daß der/die Unterlenkerzapfen 21,22 der Anlenkstelle 17 an der der Mäheinrichtung 1 abgewandten Seite der Dreipunktanbauvorrichtung 9 bei der Schwenkbewegung des Lenkers 25 aus der Ausgangsstellung der Schwenkbewegung der Mäheinrichtung 1 beim Auftreffen auf einen Stein oder dergleichen Hindernisse zumindest teilweise nachgeführt wird (Fig.2 und 3). Das bedeutet, daß während der beim Auftreffen auf einen Stein oder dgl. Hindernis einsetzenden Schwenkbewegung der Mäheinrichtung 1, deren Drehpunkt im Bereich des Unterlenkerzapfens 22 der Anlenkstelle 16 an der der Mäheinrichtung 1 zugewandten Seite der Dreipunktanbauvorrichtung 9 liegt, der Lenker 25 der Lenkeranordnung 24 aus seiner Ausgangsstellung in zur Fahrt- und Arbeitsrichtung F entgegengesetzter Richtung verschwenkt wird und sich dabei der/die Unterlenkerzapfen 21,22 der Anlenkstelle 17 an der der Mäheinrichtung 1 abgewandten Seite zumindest in etwa auf einer Kreisbahn um den Unterlenkerzapfen 22 an der der Mäheinrichtung 1 zugewandten Anlenkstelle 16 bewegen. Dadurch werden in vorteilhafter Weise Verspannungen zwischen den im praktischen Einsatz seitlich arretierten Unterlenkern 6,7 (Fig.2) der Hubeinrichtung 8 vermieden. Um diese Nachführeigenschaften zu erreichen, ist die Lagerung des Lenkers 25 der Lenkeranordnung 24 so gestaltet, daß eine durch einen Lagerbolzen 30 des Lenkers 25 der Lenkeranordnung 24 führende Achse 36 in einem Winkel α zu einer durch die Unterlenkerzapfen 21,22 der Anlenkstellen 16,17 führenden Mittelachse 23 ausgerichtet ist und dabei zumindest in etwa im Bereich des Unterlenkerzapfens 22 der Anlenkstelle 16 an der der Mäheinrichtung 1 zugewandten Seite der Dreipunktanbauvorrichtung 9 diese Mittelachse 23 schneidet (Fig.3). Bei der Verwendung von zwei Unterlenkerzapfen 21,22 an der Anlenkstelle 16 kann die Achse des Lagerbolzens 30 des Lenkers 25 erfindungsgemäß so ausgerichtet sein, daß diese die durch die Unterlenkerzapfen 21,22 führende Mittelachse 23 in einem etwa mittig zwischen den Unterlenkerzapfen 21,22 der Anlenkstelle 16 gelegenen Bereich schneidet. Die Achse 36 und die Mittelachse 23 liegen dabei vorzugsweise in einer zumindest in etwa vertikalen und sich quer zur Fahrt- und Arbeitsrichtung F erstreckenden Ebene. Ein weiterer vorteilhafter Aspekt der Erfindung ergibt sich, wenn die Unterlenkerzapfen 21,22 der Anlenkstelle 16 in einer horizontalen Ebene in Bezug zur Zeichenebene der Fig.3 um einen Winkel β verschwenkt zur Mittelachse 23 angeordnet werden. Dadurch wird eine Möglichkeit geschaffen, den maximalen Schwenkwinkel der Mäheinrichtung 1 (Fig.2), der abhängig von der bauartgemäß vorgegebenen Größe des Schwenkwinkels des Kugelgelenkes an dem Unterlenker 6 ist, beim Auftreffen auf einen Stein oder dgl. Hindernis zu vergrößern.

In einer Weiterbildung der Erfindung kann sich durch eine Verwendung einer mit einer Druckkraft beaufschlagbaren hydraulischen Kolben-Zylinder-Anordnung an Stelle der Strebe 26 eine vorteilhafte Ausführungsform einer Lenkeranordnung ergeben, wobei die hydraulische Kolben-Zylinder-Anordnung an ihrem Druckanschluß mit einem Hydraulikspeicher zusammenwirkt. Dadurch ergibt sich die Möglichkeit einer selbsttätigen Rückstellung der Strebe in ihre Ausgangslänge beispielsweise nach dem Auftreffen und Überqueren eines Steines oder dgl. Hindernis durch die Mäheinrichtung 1.

Obwohl in der Beschreibung und in den dazugehörigen Zeichnungen bereits vorteilhafte Ausführungen beschrieben wurden, so sind im Rahmen der Erfindung durchaus weitere Modifikationen vorstellbar. Als Beispiel sei eine Ausführungsform erwähnt, bei der die Anlenkstelle 17 an der der Mäheinrichtung 1 abgewandten Seite der Dreipunktanbauvorrichtung 9 einen Tragarm aufweist, welcher teleskopisch in seiner Länge veränderbar ausgeführt ist. Hierbei könnten Federn oder dgl. Kraftspeicher angewendet werden, um den Tragarm in seiner ausgefahrenen Stellung zu halten und erst beim Überschreiten einer vorbestimmten Haltekraft eine Überführung in die eingefahrene Stellung zulassen.

## Patentansprüche

1. Mähmaschine zum Anbau an eine Hubeinrichtung (8) eines landwirtschaftlichen Trägerfahrzeuges mit einer, in einer Arbeits- und Betriebsstellung seitlich von dem landwirtschaftlichen Trägerfahrzeug geführten Mäheinrichtung (1), welche eine Anzahl von um eine etwa vertikale Achse (2) rotierenden Schneidorganen (3) umfasst, mit einem Tragbalken (10), der einenends zur Aufnahme der Mäheinrichtung (1) ausgebildet ist und anderenends eine Dreipunktanbauvorrichtung (9) mit Anlenkstellen (16,17,18) zur Ankoppelung an Ober- und Unterlenker der Hubeinrichtung (8) aufweist, **dadurch gekennzeichnet, dass** die an der der Mäheinrichtung (1) abgewandten Seite des Tragbalkens (10) angeordnete Anlenkstelle (17) in einer der Fahrt- und Arbeitsrichtung (F) entgegengesetzten Richtung nachgiebig mit dem Tragbalken (10) verbunden ist, wobei die Bewegung eines Unterlenkerzapfens (21,22) der Anlenkstelle (17) bezüglich des Tragbalkens (10) in der der Fahrt- und Arbeitsrichtung (F) entgegengesetzten Richtung erst beim Überschreiten einer vorbestimmten Haltekraft ermöglicht wird.

2. Mähmaschine nach Anspruch 1, **dadurch gekennzeichnet, dass** als Anlenkstelle (17) ein schwenkbar an einem Tragarm (27) gelagerter Lenker (25) mit zumindest einem Unterlenkerzapfen (21,22) dient, wobei der Lenker (25) in seiner Ausgangsstellung durch eine in ihrer Länge veränderbare Strebe (26) abgestützt ist.

3. Mähmaschine nach Anspruch 2, **dadurch gekennzeichnet, dass** der Lenker (25) in Verbindung mit der längenveränderbaren Strebe (26) und dem Tragarm (27) eine Lenkeranordnung (24) ausbildet.

4. Mähmaschine nach Anspruch 3, **dadurch gekennzeichnet, dass** die Lenkeranordnung (24) oberhalb von dem Tragarm (27) der Dreipunktanbauvorrichtung (9) angeordnet ist.

5. Mähmaschine nach Anspruch 3, **dadurch gekennzeichnet, dass** die Lenkeranordnung (24) unterhalb von dem Tragarm (27) der Dreipunktanbauvorrichtung (9) angeordnet ist.

6. Mähmaschine nach einem der Ansprüche 2 bis 5, **dadurch gekennzeichnet, dass** der Lenker (25) der Lenkeranordnung (24) um eine Achse (36) schwenkbar gelagert ist, welche unter einem Winkel (α) zu einer durch die Unterlenkerzapfen (21,22) der Anlenkstellen (16,17) gerichteten Mittelachse (23) ausgerichtet ist.

7. Mähmaschine nach Anspruch 6, **dadurch gekennzeichnet, dass** die Achse (36) die durch die Unterlenkerzapfen (21,22) führende Mittelachse (23) zumindest etwa im Bereich der Unterlenkerzapfen (21 oder 22) der Anlenkstelle (16) an der der Mäheinrichtung (1) zugewandten Seite der Dreipunktanbauvorrichtung (9) schneidet.

8. Mähmaschine nach Anspruch 6, **dadurch gekennzeichnet, dass** die Achse (36) die durch die Unterlenkerzapfen (21,22) führende Mittelachse (23) zumindest etwa mittig im Bereich zwischen den Unterlenkerzapfen (21,22) der Anlenkstelle (16) an der der Mäheinrichtung (1) zugewandten Seite der Dreipunktanbauvorrichtung (9) schneidet.

9. Mähmaschine nach einem der Ansprüche 1 bis 8, **dadurch gekennzeichnet, dass** der/die Unterlenkerzapfen (21,22) der Anlenkstelle (16) an der der Mäheinrichtung (1) zugewandten Seite der Dreipunktanbauvorrichtung (9) um einen Winkel (β) zu der Mittelachse (23) der Unterlenkerzapfen (21,22) der Anlenkstelle (17) an der der Mäheinrichtung (1) abgewandten Seite der Dreipunktanbauvorrichtung (9) angeordnet ist/sind.

10. Mähmaschine nach einem der Ansprüche 2 bis 9, **dadurch gekennzeichnet, daß** die Strebe (26) als Druckstrebe ausgeführt ist.

11. Mähmaschine nach Anspruch 10, **dadurch gekennzeichnet, dass** die Strebe (26) durch eine mittels Druckfeder (33) vorgespannte und mit einer Halteklinke (35) zusammenwirkende Verriegelungsklinke (34) in ihrer ausgefahrenen Stellung gehalten wird und erst beim Überschreiten einer vorbestimmten Haltekraft in ihre eingefahrene Stellung überführbar ist.

12. Mähmaschine nach Anspruch 11, **dadurch gekennzeichnet, dass** die Vorspannkraft der Druckfeder (33) einstellbar ist.

13. Mähmaschine nach einem der Ansprüche 2 bis 10, **dadurch gekennzeichnet, dass** die Strebe (26) als eine mit einer Druckkraft beaufschlagbare, hydraulische Kolben-Zylinder-Anordnung ausgeführt ist, welche an ihrem Druckanschluss mit einem Hydraulikspeicher zusammenwirkt.

14. Mähmaschine nach Anspruch 1, **dadurch gekennzeichnet, dass** als Anlenkstelle (17) zumindest ein Unterlenkerzapfen vorgesehen ist, welcher an einem teleskopisch in seiner Länge veränderbaren Tragarm gehaltert ist.

15. Mähmaschine nach Anspruch 14, **dadurch gekennzeichnet, dass** der teleskopisch in seiner Länge veränderbare Tragarm durch eine Feder oder dgl. Kraftspeicher in seiner ausgefahrenen Stellung gehalten wird und erst beim Überschreiten einer vorbestimmten Haltekraft in seine eingefahrene Stellung überführbar ist.

## Claims

1. Mower for mounting on a lifting arrangement (8) of an agricultural carrier vehicle, having a mowing arrangement (1) which, in a working and operating position, is guided laterally of the agricultural carrier vehicle and which comprises a plurality of cutting members (3) which rotate about approximately vertical axes (2), and having a support beam (10) which at one end is formed to receive the mowing arrangement (1) and at the other end has a three-point mounting arrangement (9) having points of articulation (16, 17, 18) for coupling to top and bottom links of the lifting arrangement (8), **characterised in that that** point of articulation (17) which is arranged at the end of the support beam (10) remote from the mowing arrangement (1) is connected to the support beam (10) in such a way as to yield in a direction opposite to the direction of travel and working (F), the movement, relative to the support beam (10), of a bottom-link pin (21, 22) belonging to the point of articulation (17) in the direction opposite to the direction of travel and working (F) becoming possible only when a predetermined restraining force is exceeded.

2. Mower according to claim 1, **characterised in that** what is used as a point of articulation (17) is a link (25) which is mounted on a supporting arm (27) and has at least one bottom-link pin (21, 22), the link (25) being supported in its starting position by a strut (26) whose length is variable.

3. Mower according to claim 2, **characterised in that**, in conjunction with the strut (26) of variable length and the supporting arm (27), the link (25) forms a linkage arrangement (24).

4. Mower according to claim 3, **characterised in that** the linkage arrangement (24) is arranged above the supporting arm (27) of the three-point mounting arrangement (9).

5. Mower according to claim 3, **characterised in that** the linkage arrangement (24) is arranged below the supporting arm (27) of the three-point mounting arrangement (9).

6. Mower according to one of claims 2 to 5, **characterised in that** the link (25) of the linkage arrangement (24) is mounted to be pivotable about an axis (36) which is aligned at an angle (α) to a centre axis (23) directed through the bottom-link pins (21, 22) of the points of articulation (16, 17).

7. Mower according to claim 6, **characterised in that** the axis (36) intersects the centre axis (23) extending through the bottom-link pins (21, 22) at least approximately in the region of the bottom-link pins (21 or 22) of the point of articulation (16) situated on that side of the three-point mounting arrangement (9) which is adjacent the mowing arrangement (1).

8. Mower according to claim 6, **characterised in that** the axis (36) intersects the centre axis (23) extending through the bottom-link pins (21, 22) at least approximately centrally in the region between the bottom-link pins (21, 22) of the point of articulation (16) situated on that side of the three-point mounting arrangement (9) which is adjacent the mowing arrangement (1).

9. Mower according to one of claims 1 to 8, **characterised in that** the bottom-link pin/pins (21, 22) of the point of articulation (16) situated on that side of the three-point mounting arrangement (9) which is adjacent the mowing arrangement (1) is/are arranged at an angle (β) to the centre axis (23) of the bottom-link pins (21, 22) of the point of articulation (17) situated on that side of the three-point mounting arrangement (9) which is remote from the mowing arrangement (1).

10. Mower according to one of claims 2 to 9, **characterised in that** the strut (26) is in the form of a compression strut.

11. Mower according to claim 10, **characterised in that** the strut (26) is held in its extended position by a locking detent (34) which is preloaded by means of a compression spring (33) and which co-operates with a restraining detent (35), and the strut (26) can only be transferred to its withdrawn position when a predetermined restraining force is exceeded.

12. Mower according to claim 11, **characterised in that** the preloading force from the compression spring (33) can be set.

13. Mower according to one of claims 2 to 10, **characterised in that** the strut (26) is in the form of a hydraulic piston-and-cylinder arrangement to which a force created by pressure can be applied and which co-operates, at its pressure port, with a hydraulic accumulator.

14. Mower according to claim 1, **characterised in that** what is provided as a point of articulation (17) is at least one bottom-link pin which is mounted on a supporting arm whose length can be varied telescopically.

15. Mower according to claim 14, **characterised in that** the supporting arm whose length can be varied telescopically is held in an extended position by a spring or the like force-storing means and can be transferred to its withdrawn position only when a predetermined restraining force is exceeded.

## Revendications

1. Faucheuse à monter sur une installation de levage (8) d'un véhicule porteur agricole, comprenant :
- un dispositif de fauchage (1) guidé latéralement dans une position de travail et de fonctionnement par le véhicule porteur agricole et équipé d'un certain nombre d'organes de coupe (3) en rotation autour d'un axe sensiblement vertical (2),
- une barre de support (10) formée à une extrémité pour recevoir le dispositif de fauchage (1), et
- un dispositif d'accouplement à trois points (9) muni de points d'articulation (16, 17, 18) à l'autre extrémité pour être accouplé à des articulations supérieures et inférieures du dispositif de levage (8),
**caractérisée en ce que**
le point d'articulation (17) disposé sur le côté de la barre de support (10) opposé au dispositif de fauchage (1) est relié à celle-ci de manière souple dans une direction opposée au sens de déplacement et de travail (F), le mouvement d'un tourillon d'articulation inférieur (21, 22) du point d'articulation (17) par rapport à la barre de support (10) n'étant possible, dans la direction opposée au sens de déplacement et de travail (F), que lorsqu'une force de retenue prédéterminée a été dépassée.

2. Faucheuse selon la revendication 1,
**caractérisée en ce qu'**
une articulation (25) qui pivote sur un bras de support (27) comprenant au moins un tourillon d'articulation inférieur (21, 22) sert de point d'articulation (17), cette articulation (25) étant soutenue, dans sa position initiale, par un support (26) de longueur variable.

3. Faucheuse selon la revendication 2,
**caractérisée en ce que**
l'articulation (25), en liaison avec le support de longueur variable (26) et le bras de support (27), forme un dispositif d'articulation (24).

4. Faucheuse selon la revendication 3,
**caractérisée en ce que**
le dispositif d'articulation (24) est disposé au-dessus du bras de support (27) du dispositif d'accouplement à trois points (9).

5. Faucheuse selon la revendication 3,
**caractérisée en ce que**
le dispositif d'articulation (24) est disposé au-dessous du bras de support (27) du dispositif d'accouplement à trois points (9).

6. Faucheuse selon l'une quelconque des revendications 2 à 5,
**caractérisée en ce que**
l'articulation (25) du dispositif d'articulation (24) peut pivoter autour d'un axe (36) orienté selon un angle (α) par rapport à un axe central (23) dirigé à travers les tourillons d'articulation inférieurs (21, 22) des points d'articulation (16, 17).

7. Faucheuse selon la revendication 6,
**caractérisée en ce que**
l'axe (36) coupe l'axe central (23) conduisant à travers les tourillons d'articulation inférieurs (21, 22) au moins sensiblement au niveau des tourillons d'articulation inférieurs (21 ou 22) du point d'articulation (16) sur le côté du dispositif d'accouplement à trois points (9) tourné vers le dispositif de fauchage (1).

8. Faucheuse selon la revendication 6,
**caractérisée en ce que**
l'axe (36) coupe l'axe central (23) conduisant à travers les tourillons d'articulation inférieurs (21, 22) au moins sensiblement au centre de la zone comprise entre les tourillons d'articulation inférieurs (21, 22) du point d'articulation (16) sur le côté du dispositif d'accouplement à trois points (9) tourné vers le dispositif de fauchage (1).

9. Faucheuse selon l'une des revendications 1 à 8,
**caractérisée en ce que**
le/les tourillon(s) d'articulation inférieur(s) (21, 22) du point d'articulation (16) est/sont disposé/s sur le côté du dispositif d'accouplement à trois points (9) tourné vers le dispositif de fauchage (1) selon un angle (β) par rapport à l'axe central (23) des tourillons d'articulation inférieurs (21, 22) du point d'articulation (17) sur le côté du dispositif d'accouplement à trois points (9) opposé au dispositif de fauchage (1).

10. Faucheuse selon l'une des revendications 2 à 9,
**caractérisée par**
le support de pression (26).

11. Faucheuse selon la revendication 10,
**caractérisée en ce que**
le support (26) est maintenu en position déployée à l'aide d'un cliquet de verrouillage (34) précontraint par un ressort de pression (33) et coopérant avec un cliquet de retenue (35) et il ne peut être déplacé en position rentrée que lorsqu'une force de retenue prédéterminée à été dépassée.

12. Faucheuse selon la revendication 11,
**caractérisée en ce que**
la force de précontrainte du ressort de pression (33) est réglable.

13. Faucheuse selon l'une des revendications 2 à 10,
**caractérisée en ce que**
le support (26) est agencé comme un piston-cylindre hydraulique qui peut être sollicité par une force de pression et coopère avec un accumulateur hydraulique au niveau de son raccord de pression.

14. Faucheuse selon la revendication 1,
**caractérisée en ce que**
le point d'articulation (17) prévoit au moins un tourillon d'articulation inférieur maintenu de façon télescopique sur un bras de support de longueur variable.

15. Faucheuse selon la revendication 14,
**caractérisée en ce que**
le bras de support télescopique à longueur variable est maintenu en position déployée par un ressort ou autre accumulateur de force et ne peut se déplacer en position rentrée que lorsqu'une force de retenue prédéterminée a été dépassée.
